# EUROPEAN PATENT SPECIFICATION

(11) **EP 2 602 457 B1**
(45) Date of publication and mention of the grant of the patent: **21.10.2015**
(21) Application number: 12194879.8
(22) Date of filing: 29.11.2012
(51) Int. Cl.: F02C 7/22, F02K 1/76, F02C 7/228, F02K 1/56, F01D 17/14, F01D 17/26, F02C 9/26, F02K 1/09

(54) **Aircraft engine system**
Triebwerkssystem für ein Flugzeug
Système de moteur d'avion

(30) Priority: 08.12.2011 US 201161568489 P; 21.03.2012 US 201213426256
(43) Date of publication of application: 12.06.2013
(73) Proprietor: Honeywell International Inc., Morristown, NJ 07962-2245 (US)
(72) Inventor: Vaughn, Ron, Morristown, NJ New Jersey 07962-2245 (US); McGill, Michael, Morristown, NJ New Jersey 07962-2245 (US); Chakkera, Kevin K., Morristown, NJ New Jersey 07962-2245 (US); Portolese, Larry, Morristown, NJ New Jersey 07962-2245 (US); Behnke, Mark, Morristown, NJ New Jersey 07962-2245 (US)
(74) Representative: Houghton, Mark Phillip

(56) References cited:
- EP-A2- 1 978 231
- WO-A2-2009/029401
- FR-A1- 2 882 097
- GB-A- 2 446 441
- US-A- 6 000 216
- US-A1- 2009 320 444

## Description

### TECHNICAL FIELD

The present invention relates to aircraft case assemblies, particularly case assemblies with aircraft thrust reverser actuation systems (TRAS) and aircraft variable area fan nozzle (VAFN) systems.

### BACKGROUND

Conventional gas turbine engines generally include a fan section and a core engine with the fan section having a larger diameter than that of the core engine. The fan section and the core engine are disposed about a longitudinal axis and are enclosed within an engine nacelle assembly.

Combustion gases are discharged from the core engine through a core exhaust nozzle while an annular fan flow, disposed radially outward of the primary airflow path, is discharged through an annular fan exhaust nozzle system defined between a fan nacelle and a core nacelle. A majority of thrust is produced by the pressurized fan air discharged through the fan exhaust nozzle, the remaining thrust being provided from the combustion gases discharged through the core exhaust nozzle.

The fan nozzles of conventional gas turbine engines have a fixed geometry. Some gas turbine engines have implemented variable area fan nozzles. The variable area fan nozzles provide a smaller fan exit nozzle diameter to optimize operation during certain conditions. However, existing fan variable area nozzles typically utilize relatively complex mechanisms that undesirably increase overall engine weight and decrease fuel efficiency.

The nozzle system may be positioned on or adjacent to the transcowls of a thrust reverser system. When a jet-powered aircraft lands, the landing gear brakes and imposed aerodynamic drag loads (e.g., flaps, spoilers, etc.) of the aircraft may not be sufficient to slow the aircraft down in the required amount of runway distance. Thus, jet engines on most aircraft include thrust reversers to enhance the braking of the aircraft. When deployed, a thrust reverser redirects the rearward thrust of the jet engine to a forward or semi-forward direction to decelerate the aircraft upon landing. When in the stowed position, the thrust reverser is in a position that generally does not redirect the engine thrust.

The primary use of thrust reversers is to enhance the braking power of the aircraft, thereby shortening the stopping distance during landing. Hence, thrust reversers are usually deployed during the landing process to slow the aircraft. The moveable thrust reverser components are moved between the stowed and deployed position with actuators. Power to drive the actuators may come from one or more drive motors connected to the actuators, depending on the system design requirements. Although additional types of power may be desired, modifications to the thrust reversers, like the fan variable area nozzle systems, may result in increased complexity and decreased fuel efficiency.

US 2009/0320444 discloses an actuation apparatus for a thrust reverser in a turbo machine. EP 1978231 discloses an actuator arrangement for transmitting rotary drive from a motor the transmission including a telescopic drive coupling for a variable air flow fan. US 6000216 discloses an actuating system for a cascade type thrust reverser. GB 2446441 discloses a dual cylinder actuator arrangement for an aero engine nozzle and reverser. FR 2882097 discloses a variable geometry aircraft gas turbine engine controlled by electromechanical actuators

Accordingly, it is desirable to provide improved variable area fan nozzles and thrust reverser actuation systems that, for example, reduce complexity, weight, and cost in a turbofan engine. Furthermore, other desirable features and characteristics of the present invention will become apparent from the subsequent detailed description of the invention and the appended claims, taken in conjunction with the accompanying drawings and this background of the invention.

### BRIEF SUMMARY

The present invention relates to an engine according to claim 1 and in its various aspects is as set out in the appended claims. In accordance with an exemplary embodiment, a thrust reverser actuation system (TRAS) for a case assembly of an aircraft is provided. The TRAS includes a fuel-driven motor; one or more actuators coupled to the fuel-driven motor; and a transcowl coupled to the actuators such that the fuel-driven drives the transcowl during operation.

In accordance with another exemplary embodiment, an engine assembly for an aircraft is provided. The engine system includes an engine system having an inlet and an outlet; a thrust reverser actuation system (TRAS) configured to selectively block the outlet; and a fuel system configured to supply a first portion of fuel to the engine system and a second portion of fuel to the TRAS.

### BRIEF DESCRIPTION OF THE DRAWINGS

The present invention will hereinafter be described in conjunction with the following drawing figures, wherein like numerals denote like elements, and
FIG. 1 is a perspective view of an aircraft engine system according to an exemplary embodiment;
FIG. 2 is a schematic cross-sectional view of the engine system of FIG. 1 according to an exemplary embodiment;
FIG. 3 is a partial, more detailed cross-sectional view of the engine system of FIG. 2 with a transcowl and nozzle in a first position according to an exemplary embodiment;
FIG. 4 is a partial, more detailed cross-sectional view of the engine system of FIG. 2 with a transcowl in a second position according to an exemplary embodiment;
FIG. 5 is a partial, more detailed cross-sectional view of the engine system of FIG. 2 with a nozzle in a second position according to an exemplary embodiment;
FIG. 6 is a simplified functional schematic representation of a fuel system that drives motors associated with the case assembly; and

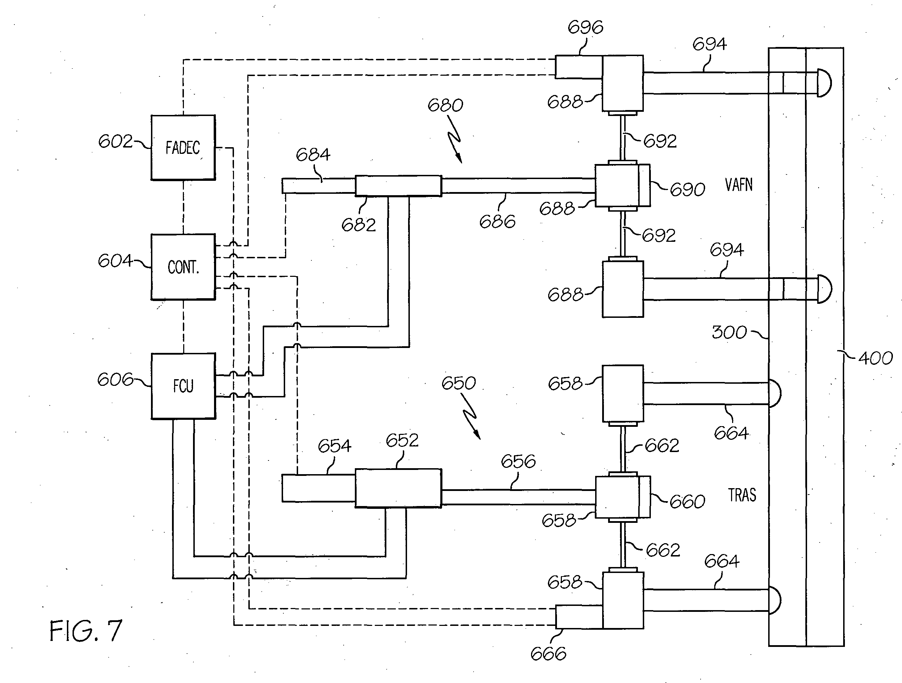

FIG. 7 is a simplified functional schematic representation of an actuation system of a case assembly according to an exemplary embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

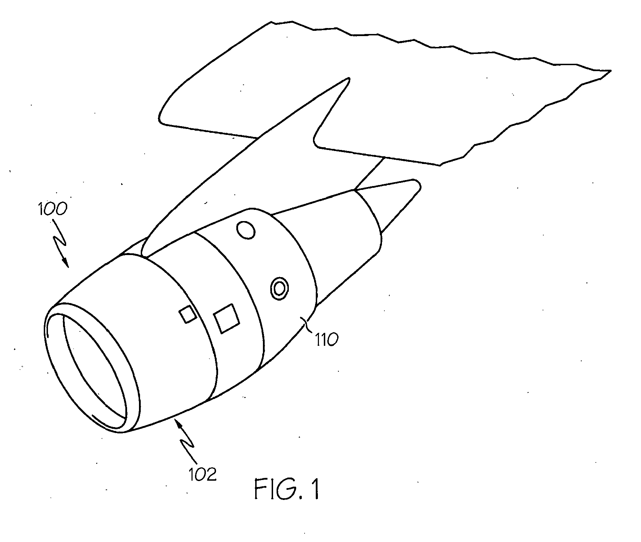

FIG. 1 is a perspective view of portions of an aircraft jet engine system 100 with a fan case 102. Typically, the fan case 102 encloses a turbofan engine, as described below, and mounts the engine for aircraft operation. As also discussed below, the engine system 100 may include a case assembly 110 to optimize operation.

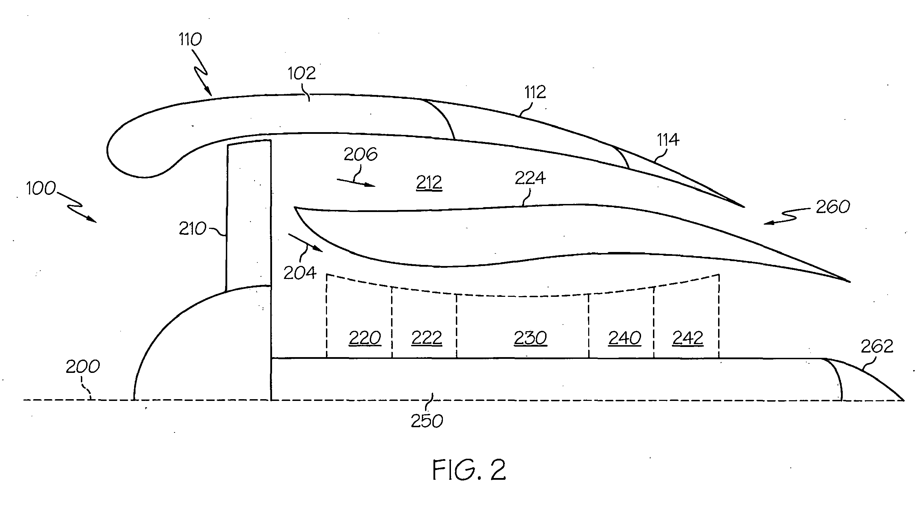

FIG. 2 is a schematic cross-sectional view of the engine system 100 of FIG. 1. The engine system 100 is circumferentially disposed about an engine centerline 200. The engine system 100 includes a fan 210, a low pressure compressor 220, a high pressure compressor 222, a combustion section 230, a high pressure turbine 240, and a low pressure turbine 242 arranged around an engine shaft 250. Typically, air is compressed in the compressors 220, 222, mixed with fuel and burned in the combustion section 230, and expanded in the turbines 240, 242. The turbines 240, 242 include rotors coupled for rotation with the engine shaft to drive the compressors 220, 222 and the fan 210 in response to the expansion of combustion gases.

In the example shown, the engine system 100 is a gas turbine bypass turbofan arrangement in which the diameter of the fan 210 is larger than that of the compressors 220, 222. As such, the case (or nacelle) 102 extends circumferentially about the fan 210 to define a bypass air flow path 212 extending between the case 102 and an inner cowl 224, which generally surrounds the compressors 220, 222, combustion section 230, and turbines 240, 242.

In operation, the fan 210 draws air into the engine system 100 as core flow 204 and into the bypass air flow path 212 as bypass air flow 206. A rear exhaust 260 discharges the bypass air flow 206 from the engine system 100, and the core flow 204 is discharged from a passage between the inner cowl 224 and a tail cone 262 to produce thrust.

As described in greater detail below, the case assembly 110 includes a thrust reverser actuation system (TRAS) 112 and a variable area fan nozzle (VAFN) system 114 to manipulate bypass air flow 206 in the flow path 212. In general, the TRAS 112 functions to selectively block the bypass air flow path 212 of the engine to provide braking to the aircraft, e.g., as redirected thrust. The VAFN system 114 functions to selectively adjust the flow area of the bypass air flow path 212 to optimize engine operation.

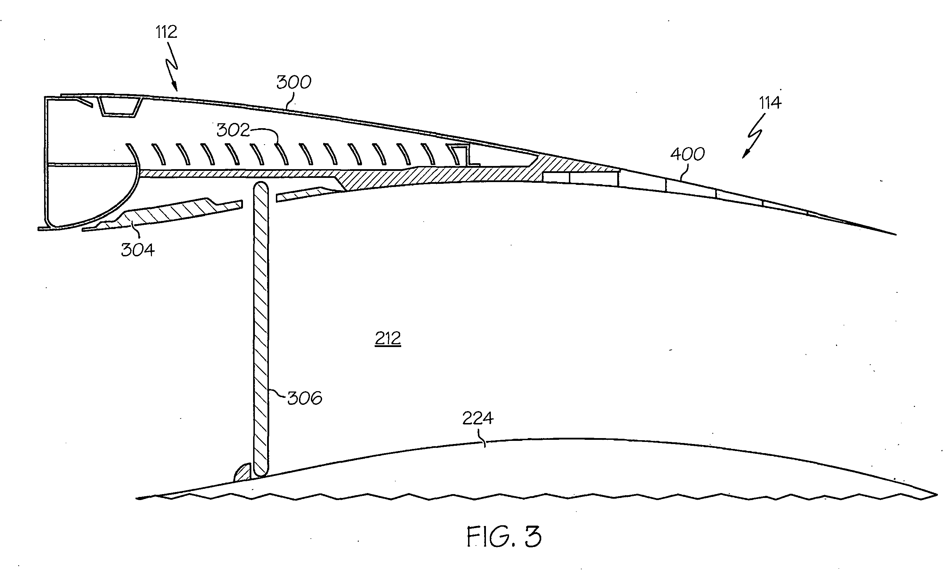

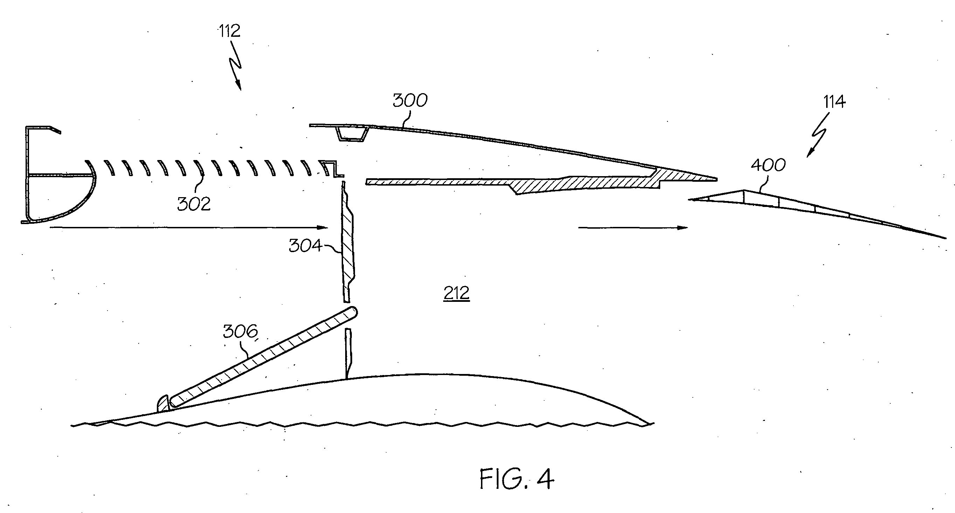

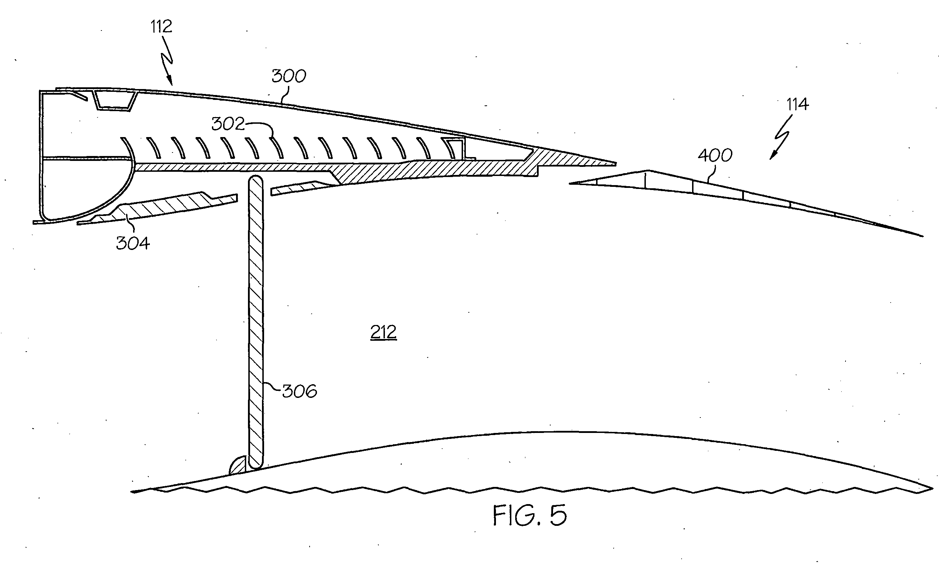

FIGS. 3-5 illustrate the operation of the TRAS 112 and VAFN system 114 relative to the bypass air flow path 212. In particular, FIG. 3 is a partial, more detailed cross-sectional view of the aircraft engine of FIG. 2 with the TRAS 112 and VAFN system 114 in a first position. FIG. 4 is a partial, more detailed cross-sectional view of the aircraft engine of FIG. 2 with the TRAS 112 in a second position, and FIG. 5 is a partial, more detailed cross-sectional view of the aircraft engine of FIG. 2 with the VAFN system 114 in a second position.

As is described in greater detail below, the TRAS 112 includes one or more semi-circular transcowls (or "reverser cowls") 300 that are positioned circumferentially on the outside of the jet engine fan case 102 (FIG. 1), typically on a fixed structure or torque box. In one exemplary embodiment, the TRAS 112 includes a pair of semi-circular transcowls 300 that extend around the case 102. The VAFN system 114 includes trailing edge fan nozzles 400 arranged at the downstream ends of the transcowls 300. Additional details about the operation and deployment of the transcowls 300 and nozzles 400 will be provided below with respect to FIGS. 3-5 prior to a more detailed description of the actuators that adjust the transcowls 300 and nozzles 400.

As shown more particularly in FIG. 3, the transcowls 300 cover a plurality of vanes 302, which may be cascade-type vanes that are positioned between the transcowls 300 and a bypass air flow path 212. When in the stowed position, as depicted in FIG. 3, the transcowls 300 are pressed against one or more stow seals, which keep air in the bypass air flow path 212. The transcowls 300 are mechanically linked to a series of blocker doors 304 via a drag link 306. In the stowed position, the blocker doors 304 form a portion of an outer wall and are therefore oriented parallel to the bypass air flow path 212.

However, as is shown in FIG. 4, when the TRAS 112 is commanded to deploy, the transcowls 300 are translated aft, causing the blocker doors 304 to rotate into a deployed position, such that the bypass air flow path 212 is blocked. This also causes the vanes 302 to be exposed and the bypass air flow to be redirected out the vanes 302. The redirection of the bypass air flow in a forward direction creates a reverse thrust and thus works to slow the airplane.

Now referring FIG. 5, which depicts the TRAS 112 in the stowed position, the VAFN system 114 may selectively adjust the nozzles 400 mounted on the trailing edges of the transcowls 300 to optimize the engine performance under different flight conditions. The nozzles 400 may be nozzle-like annular airfoil structures selectively translated (i.e., moved fore and aft) to vary the fan nozzle's exit area and to adjust an amount of engine bypass flow. As compared to FIG. 3, the nozzles 400 in FIG. 5 have been translated aft. Any number of nozzles 400 may be provided, although in one exemplary embodiment, two nozzles 400 are provided.

As such, the transcowls 300 and nozzles 400 are selectively translated with one or more actuation systems. In one exemplary embodiment, the nozzles 400 are only operated when the transcowl 300 is in the stowed position. In other words, the nozzles 400 are not operated when the aircraft is landing in this exemplary embodiment. Other embodiments may have different configurations.

As described below, the nozzles 400 are actuated by a fuel-driven motor that respectively receive pressurized fluid (e.g., fuel) from the fuel system. In one exemplary embodiment, the motor produces rotary torque that drives one or more linear actuators. Additional details about actuation of the TRAS 112 are provided below after a brief introduction of the fuel system and hydraulic system.

The fuel system 500 generally includes a fuel source 510, a fuel pump 520, a fuel metering unit 525, and a controller 530. The fuel source 510 may be implemented as one or more tanks. In the depicted embodiment, the fuel pump 520 is a positive displacement pump such as, for example, a gear pump, although it could be implemented using any one of numerous other types of pumps. Although not shown, other components of the fuel system 500 may include various types of pumps, valves, motors, electrical controls, actuators, sensors, and the like.

During operation, a supply line delivers fuel from the fuel source 510 to the fuel pump 520. The fuel pump 520 provides fuel to the fuel metering unit 525 for delivery of fuel to a gas turbine engine 540 and also provides fuel to the case assembly 110. Additionally, fuel may be returned to the fuel pump 520 from the fuel metering unit and the case assembly 110.

As is generally known, the gas turbine engine 540 receives the fuel, mixes the fuel with air, ignites the fuel-air mixture, and extracts energy from the resulting combustion products. In one exemplary embodiment, the gas turbine engine 540 corresponds to the engine of the engine system 100 described above with respect to FIG. 2, e.g., fuel may be introduced into the combustion section 230. As described in greater detail below, the case assembly 110 receives the fuel to hydraulically drive one or more motors.

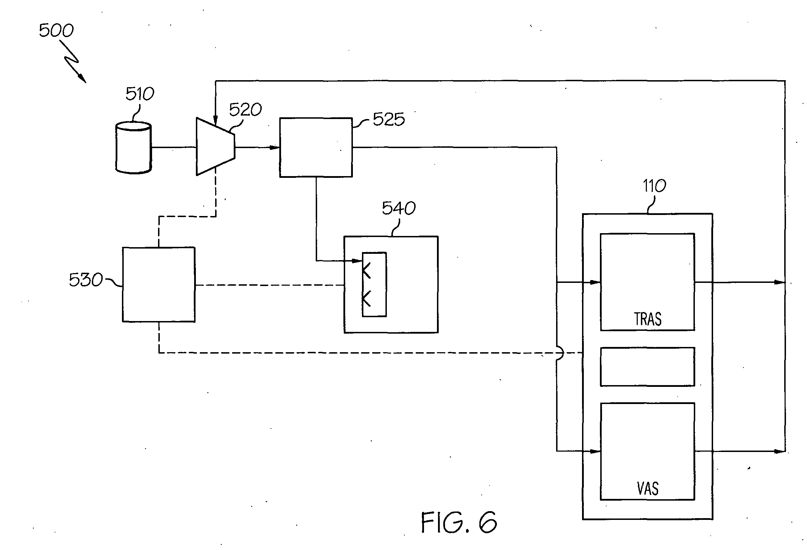

FIG. 6 is a simplified functional schematic representation of an actuation system 600 of the case assembly 110 according to a first exemplary embodiment. In general, the actuation system 600 modulates the deployment and stowing of the thrust reverser actuation system (TRAS) 650 and the variable area fan nozzle (VAFN) system 680. The TRAS 650 may correspond to the TRAS 112 discussed above, and the VAFN system 680 may correspond to the VAFN system 114 discussed above.

In general, the actuation system 600 may include a Full Authority Digital Engine Controller (FADEC) 602, a low voltage controller 604, and a fuel control unit 606 that collectively provide fuel, power, and control to the TRAS 650 and VAFN system 680. As also described in greater detail below, the TRAS 650 includes a fuel-driven motor 652, a brake (or lock) 654, a speed snubber 656, one or more gear boxes 658, a manual drive 660, one or more flexible shafts 662, one or more actuators 664, and one or more sensors 666. The VAFN system 680 includes a fuel-driven motor 682, a brake (or lock) 684, a speed snubber 686, one or more gear boxes 688, a manual drive 690, one or more flexible shafts 692, one or more actuators 694, and one or more sensors 696.

In general, the FADEC 602, which may form part of a broader aircraft control system, provides deploy and stow commands for the TRAS 650 and VAFN system 680 based on signals from a pilot, an aircraft controller, and sensor signals, such as from the sensors 666 and 696. In particular, the FADEC 602 provides such commands to the low voltage controller 604. In response, the low voltage controller 604 provides command signals and/or power to the TRAS 650 and/or the VAFN system 680, as described below, and commands signals and/or power to the fuel control unit 606. The low voltage controller 604 may include, for example, EMI filters. In response, the fuel control unit 606 provides the necessary amount of fuel to the TRAS 650 and/or the VAFN system 680 to effectuate the command, as also described below.

In one exemplary embodiment, the fuel control unit 606 may include a 2-stage EHSV for speed control with high pressure gain for minimizing hysteresis and threshold issues. For example, such an EHSV may be controlled with a milliamp current driver with a linear relationship between milliamp command and motor speed. Solenoids may be used in some situations. In general, the control unit 606 is configured to, in response to commands from the controller 604, selectively supply fuel to the motors 652 and 682.

In one exemplary embodiment, the low voltage controller 604 is supplied with power from a 28VDC power supply, although other power arrangements may be provided. In general, the controller 604 requires relatively low voltages, e.g., less than 110V. The fuel control unit 606 may form part of the larger fuel system 500 (FIG. 5) and/or receive fuel from the fuel system 500 described above. The case assembly 110 may additionally receive inputs (e.g., arm and disarm commands) from the aircraft controller.

In general, the motor 652 may be any motor that uses the pressure of the fuel from the fuel system 500 (FIG. 6) to produce a torque. In one exemplary embodiment, the fuel-driven motor 652 may have retrofitting advantages for existing engine systems in which fuel is already provided to the engine. In other words, the fuel-driven motor 652 may take advantage of existing fluid pressure in the engine system. In some embodiments, components of the fuel system 500 (FIG. 6) may not need to be modified to provide fuel to the VAFN system 600 since flow demands typically do not overlap with other uses. Unlike an EM motor, the motor 652 does not require a high voltage electrical power source or high power electric controller, e.g. the low voltage controller 604 is generally sufficient. In one exemplary embodiment, the fuel-driven motor 652 manufactured from materials that enable operation in low lubricity conditions, e.g., with low lubricity liquids like fuel. Additionally, by using a motor 652 that uses a pressure to generate a torque, the fuel only needs to be provided to the motor for actuation, e.g., not to the individual actuators. The motor 652 may be, for example, about 1-2 hp, or less than 10 hp, although any suitable size may be provided.

As such, during operation, the fuel-driven motor 652 receives fuel from the fuel control unit 606 via fuel feed lines. The fuel-driven motor 652 uses the pressurized fuel to produce mechanical torque, which in turn, drives the actuators 664 via the snubber 656, gearboxes 658, and shafts 662. In some embodiments, the snubber 656 may be omitted. The brake 654 may be an EM and/or fuel driven energized brake or lock.

The actuators 664 function to drive the transcowls 300 in stowed and deployed positions in a synchronized manner. As described above in reference to FIGS. 3-5, in a first position, the transcowls 300 are pressed against one or more stow seals, the blocker doors 180 are oriented parallel to the bypass air flow path 160, and the air remains in the bypass air flow path 160. In a second position, the transcowls 300 are translated aft, causing the blocker doors 180 (FIGS. 3-5) to rotate into a deployed position, such that the bypass air flow path 160 is blocked, thereby creating a reverse thrust and slowing the airplane. In some embodiments, intermediate positions may also be provided. Sensors 666 may provide position and status feedback information to the FADEC 602 to determine the appropriate command. Such sensors may be, for example, RVDT, LVDT, and/or resolver assemblies to provide T/R position signals. Although not specifically shown, locks, lock sensors, and other sensors and/or safety components may be provided.

The actuators 664 are typically ballscrew actuators with the translating nut attached to the rotary/linear variable differential transformers attached to the gearbox drive shaft, although other types of actuators may be provided, including electrical, mechanical, pneumatic, hydraulic, or the like, interconnected by appropriate power cables and conduits (not shown). A gimbal or other structure couples the actuators 664 to the transcowl 300. Additionally, a manual drive unit 660 mounts to the gearbox 658 and mates with a gearshaft allowing for manual extension and retraction of the transcowl 300. In one exemplary embodiment, the shafts 662 are flexible.

As noted above, the actuators 664 may be linear actuators (e.g., ballscrew actuators) that are driven (e.g., retracted and extended) by the torque from the motor 652. Additional details about the actuators 664 may be provided in Application No. xx/xxx,xxx (Attorney Docket No. H0032860 (002.3696)), filed March 21, 2012 by the assignee of the present application and incorporated herein by reference. By using a motor 652 that uses a pressure to generate a torque, the fluid only needs to be provided to the motor for actuation, e.g., not to the individual actuators. The motor 652 may be, for example, about 14-16 hp, or between less than 2-70 hp, although any suitable size may be provided.

The fuel-driven motor 652 enables a reduction in maintenance, and typically, such motors do not need to be bled since the fuel tanks are relatively large and the fuel system will naturally bleed any air out of the system into the engine. Such an arrangement may provide a relative simple, light-weight, and low-power case assembly 110. The fuel-driven motor 652 particularly uses the working fuel pressure already present in the case for the aircraft engine. In one exemplary embodiment, the fuel-driven TRAS effectively may eliminate the heavy valve equipment and aircraft supply/returns lines, as compared to a hydraulic system to result in a more integrated system. Similarly, in one exemplary embodiment, the fuel-driven TRAS effectively may eliminate the large controller and power conditioning module, large electric motor and associated large-diameter, high voltage power feed lines, as compared to a dedicated electric motor system.

Now turning to the VAFN system 680, the fuel-driven motor 682 also receives fuel from the fuel control unit 606 via fuel feed lines. The fuel-driven motor 682 uses the pressurized fuel to produce mechanical torque, which in turn, drives the actuators 684 via the snubber 686 and gearboxes 688. In some embodiments, the snubber 686 may be omitted. The brake 684 may be an EM and/or fuel driven energized brake or lock.

The actuators 684 function to drive the nozzles 400 in stowed and deployed positions in a synchronized manner. As described above in reference to FIGS. 3 and 4, the effective flow area may be adjusted by moving the nozzle position from 0% to 100% of stroke. Sensors 696 may provide position and status feedback information to the FADEC 602. Such sensors may be, for example, RVDT, LVDT, and/or resolver assemblies to provide T/R position signals. Although not specifically shown, locks, lock sensors, and other sensors and/or safety components may be provided.

The actuators 684 are typically ballscrew actuators with the translating nut attached to the rotary/linear variable differential transformers attached to the gearbox drive shaft, although other types of actuators may be provided, including electrical, mechanical, pneumatic, hydraulic, or the like, interconnected by appropriate power cables and conduits (not shown). The actuators 684 may be telescoping and/or decoupling actuators, for example, that decouple and render the nozzles 400 as fixed when the transcowl 300 is in a deployed position, e.g., exemplary embodiments provide an engaging/disengaging drive coupling with synchronized actuator locking and unlocking feature. A gimbal or other structure couples the actuators 684 to the nozzles 400. Additionally, a manual drive unit 680 mounts to the gearbox 688 and mates with a gearshaft allowing for manual extension and retraction of the nozzles 400. In one exemplary embodiment, the shafts 682 are flexible.

Similar to the fuel-driven motor 652 of the TRAS 650, the fuel-driven motor 682 of the VAFN system 680 enables a reduction in maintenance, and typically, such motors do not need to be bled. Such an arrangement may provide a relative simple, light-weight, and low power case assembly 100. The fuel-driven motor 682 particularly uses the working fuel pressure already present in the case for the aircraft engine.

In one exemplary embodiment, the nozzle actuator 694 is operated only after the thrust reverser transcowls 300 are stowed and locked. At that time, the drive coupling engages the gearbox on the fixed torque box to the nozzle actuator 694 and simultaneously unlocks the actuator 694 to enable fan nozzle operation during takeoff, cruise, and prior to landing/reverser operation. When the aircraft lands and the thrust reverser transcowl 300 is commanded to deploy, the drive coupling disengages and the nozzle actuator 694 is locked. As noted above, independent arrangements may be provided. For example, although the depicted embodiment illustrates the actuators 694 mounted on the transcowls 300, the actuators 694 may be mounted on a torque box of the engine. As shown, the FADEC 602, controller 604, and fuel control unit 606 are common to both the VAFN 680 and TRAS 650, although in other embodiments, one or more of the control components may be dedicated and/or separate. Common control components may reduce cost, complexity, weight, and space by avoiding unnecessary duplication of equipment and connections.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An engine system (100) for an aircraft, comprising:
an engine assembly having an inlet and an outlet; and
a case assembly (110), **characterised in that** it further comprises
a thrust reverser actuation system (TRAS) (112) configured to selectively block the outlet, the TRAS (112) comprising a first fuel-driven motor (652), one or more first actuators (664) coupled to the first fuel-driven motor (652), and a transcowl (300) coupled to the first actuators (664) such that the first fuel-driven motor drives the transcowl (300) during operation; (see paragraph 9)
a variable area fan nozzle (VAFN) system (114) to selectively vary an exit area of the outlet by means of one or more second actuators (694), the VAFN system (114) comprising a second fuel-driven motor (682) driving the one or more second actuators (694) (see paragraph 46 in conjunction with the description more generally) ; and
a controller (530, 604, 606) configured to control the first fuel-driven motor (652) and the second fuel-driven motor (682); and
a fuel system (500) configured to supply a first portion of fuel to the engine system (100) and a second portion of fuel to the TRAS (112) and the VAFN system (114).

2. The engine system (100) of claim 1 , wherein the first fuel-driven motor (652) is configured to output a torque.

3. The engine system (100) of claim 2, wherein the one or more first actuators (664) includes a linear actuator (694) driven by the torque provided by the first fuel-driven motor (652).

4. The engine system (100) of claim 3, wherein the linear actuator (694) is a ballscrew actuator (694).

5. The engine system (100) of claim 1, wherein the first fuel-driven motor (652) is less than 7.45kW (10 horsepower).

6. The engine system (100) of claim 1, wherein the controller (604) is a low voltage controller requiring less than 110V.

## Patentansprüche

1. Motorsystem (100) für ein Flugzeug, umfassend:
eine Motoranordnung mit einem Einlass und einem Auslass; und
eine Gehäuseanordnung (110), **dadurch gekennzeichnet, dass** es ferner ein Schubumkehrbetätigungssystem (TRAS) (112) umfasst, das zum selektiven Blockieren des Auslasses konfiguriert ist, wobei das TRAS (112) einen ersten kraftstoffbetriebenen Antrieb (652), einen oder mehrere erste Aktoren (664), die mit dem ersten kraftstoffbetriebenen Antrieb (652) gekoppelt sind, und einen Schubumkehrer (300) umfasst, der mit den ersten Aktoren (664) gekoppelt ist, sodass der erste kraftstoffbetriebene Antrieb den Schubumkehrer (300) während des Betriebs antreibt;
ein System (114) mit einer Düse mit veränderlichem Querschnitt (VAFN), um selektiv einen Austrittsbereich des Auslasses eines oder mehrerer zweiter Aktoren (694) zu variieren, wobei das VAFN System (114) einen zweiten kraftstoffbetriebenen Antrieb (682) umfasst, der den einen oder die mehreren zweiten Aktoren (694) antreibt; und
eine Steuerung (530, 604, 606) die zum Steuern des ersten kraftstoffbetriebenen Antriebs (652) und des zweiten kraftstoffbetriebenen Antriebs (682) konfiguriert ist; und
ein Kraftstoffsystem (500), das zum Abgeben eines ersten Abschnitts von Kraftstoff an das Motorsystem (100) und eines zweiten Abschnitts des Kraftstoffs an das TRAS (112) und das VAFN-System (114) konfiguriert ist.

2. Motorsystem (100) nach Anspruch 1, wobei der erste kraftstoffbetriebene Antrieb (652) zur Ausgabe eines Drehmoments konfiguriert ist.

3. Motorsystem (100) nach Anspruch 2, wobei der eine oder die mehreren ersten Aktoren (664) einen Linearantrieb (694) aufweisen, der durch das Drehmoment von dem ersten kraftstoffbetriebenen Antrieb (652) bereitgestellt wird.

4. Motorsystem (100) nach Anspruch 3, wobei der Linearantrieb (694) ein Kugelgewindeaktor (694) ist.

5. Motorsystem (100) nach Anspruch 1, wobei der erste kraftstoffbetriebene Antrieb (652) weniger als 7,45 kW (10 PS) ergibt.

6. Motorsystem (100) nach Anspruch 1, wobei die Steuerung (604) eine Niederspannungssteuerung ist, die weniger als 110V erfordert.

## Revendications

1. Système de moteur (100) pour un aéronef, comprenant :
un ensemble moteur comportant une entrée et une sortie ; et
un ensemble carter (110), **caractérisé en ce qu'**il comprend en outre
un système d'actionnement d'inverseur de poussée (TRAS - Thrust Reverser Actuation System) (112) configuré pour bloquer de manière sélective la sortie, le TRAS (112) comprenant un premier moteur à carburant (652), un ou plusieurs premiers actionneurs (664) accouplés au premier moteur à carburant (652) et un manchon coulissant (300) accouplé aux premiers actionneurs (664) de telle sorte que le premier moteur à carburant entraîne le manchon coulissant (300) lors du fonctionnement ;
un système de tuyère secondaire à section variable (VAFN - Variable Area Fan Nozzle) (114) permettant de faire varier de manière sélective une section d'éjection de la sortie au moyen d'un ou plusieurs seconds actionneurs (694), le système de VAFN (114) comprenant un second moteur à carburant (682) entraînant le ou les seconds actionneurs (694) ; et
un dispositif de commande (530, 604, 606) configuré pour commander le premier moteur à carburant (652) et le second moteur à carburant (682) ; et
un circuit de carburant (500) configuré pour acheminer une première partie du carburant au système de moteur (100) et une seconde partie du carburant au TRAS (112) et au système de VAFN (114).

2. Système de moteur (100) selon la revendication 1, dans lequel le premier moteur à carburant (652) est configuré pour produire un couple.

3. Système de moteur (100) selon la revendication 2, dans lequel le ou les premiers actionneurs (664) comprennent un actionneur linéaire (694) entraîné par le couple fourni par le premier moteur à carburant (652).

4. Système de moteur (100) selon la revendication 3, dans lequel l'actionneur linéaire (694) est un actionneur à vis à billes (694).

5. Système de moteur (100) selon la revendication 1, dans lequel le premier moteur à carburant (652) a une puissance inférieure à 7,45 kW (10 chevaux-vapeur (hp)).

6. Système de moteur (100) selon la revendication 1, dans lequel le dispositif de commande (604) est un dispositif de commande à basse tension nécessitant moins de 110 V.
